# EUROPEAN PATENT SPECIFICATION

(11) **EP 3 890 374 B1**
(45) Date of publication and mention of the grant of the patent: **06.05.2026**
(21) Application number: 20166641.9
(22) Date of filing: 30.03.2020
(51) Int. Cl.: H04W 4/70, B60R 25/102

(54) **METHOD AND COMMUNICATION SYSTEM FOR RELIABLY DETECTING A THEFT USING IOT DEVICES**
VERFAHREN UND KOMMUNIKATIONSSYSTEM ZUR ZUVERLÄSSIGEN ERKENNUNG EINES DIEBSTAHLS UNTER VERWENDUNG VON IOT-VORRICHTUNGEN
PROCÉDÉ ET SYSTÈME DE COMMUNICATION POUR DÉTECTER DE MANIÈRE FIABLE UN VOL À L'AIDE DE DISPOSITIFS D'IDO

(43) Date of publication of application: 06.10.2021
(73) Proprietor: Deutsche Telekom AG, 53113 Bonn (DE)
(72) Inventor: Benner, Alexander, 57627 Gehlert (DE)
(74) Representative: karo IP

(56) References cited:
- US-A1- 2004 075 541
- US-A1- 2011 151 833
- US-A1- 2012 273 289
- US-B1- 9 194 955

## Description

The invention relates to a method and a communication system in which motion profiles can be registered using compact sensor units attached to user equipment. In particular, the invention relates to a method and a communication system for detecting theft using IoT-Devices attached to valuable items of a user by recording and analyzing the motion profiles of those IoT-Devices.

The IoT (Internet-of-Things) technique is more and more used for geo-tracking of high-value, expensive items that can be stolen quite easily, such as bicycles, mowing robots, scooters, power tools and/or construction machinery. The IoT-technology is intended to track the current location and, in the event of movement, to trigger a signal intended for this event, e.g. in the event of an assumed theft an alarm signal.

Up to now, user equipment has been protected against theft by attaching an IoT-Device to the user equipment, either openly or hidden (e.g. built into the motor of an e-bike). The IoT-Device can be connected via an LPWAN (Low Power Wide Area Network) to a backend (gateway), which is exchanges information e.g. on the current position of the IoT-Device with a LNS (LoRaWAN network server). The communication between the IoT-Device and the gateway is preferably done in an energy-saving mode, e.g. using LTE-M (Long Term Evolution for Machines) or NB-loT (Narrowband Internet of Things).

In order to enable installation of the IoT-Device on the user equipment, the IoT-Device is often built very compact and usually designed in such a way that it can also be retrofitted in the user equipment. As a result, the installation locations are quickly known after a short Internet search and the IoT device can usually be dismantled quickly, for example by a thief.

The compactness of the loT-device is disadvantageous, since an aluminum foil already carried by a thief is sufficient to effectively shield the IoT-Device from sending signals and thus effectively prevents the detection and transmission of the IoT-Device's own position and thus in particular the detection of an event (user equipment is moved/stolen). The user equipment prepared in this way can then be stolen without the thief having to worry about geo-tracking.

It does not necessarily have to be an aluminum foil to prevent the IoT-Device from working in the desired way, it can also be a grid network tuned to the respective frequency or any other "device" that effectively prevents the transmission of signals from the IoT-Device to the gateway (e.g. via LTE-M or NB-IoT). As a result, the theft will not be noticed and the IoT-Device will continue to be suspected at its last known location.

In that context, US 9,194,955 B1 shows a method for obtaining data and communicating with a bicycle mounted cloud based activity monitor is provided. The method includes accepting into a server a plurality of sensor data and GPS location coordinates from a device attached to a bicycle, wherein the activity monitor communicates data to the cloud server via a wireless coupling. The method further includes writing information relating to sensor, GPS, and alarm functions from the cloud based server into the bike mounted activity tracker via a wireless link.

In that context, US 2012/273289 A1 shows system and method for self-detecting vehicle theft is provided that includes a first antenna and a second antenna, both located on a vehicle. The first antenna transmits the signal and the second antenna receives the signal. A monitoring module in communication with the second antenna is configured to determine whether the signal has changed. A vehicle security system is configured to activate based on a change in the signal.

In that context, US 2011/151833 A1 shows that communications are established between a base station and a mobile unit. The mobile unit analyzes the content of at least some information received from the base station relating to neighboring cells. When the analyzing indicates that the base station is a cloned base station, a warning is initiated to the user.

It is therefore the objective of the invention to provide an improved method, an improved communication system and/or an improved IoT-Device to increase the theft protection of a user equipment.

This problem is solved by the independent claims.

In a first aspect of the invention a method is provided for detecting an alarm case, in particular a theft, of a user equipment in a communication system comprising the following steps:
Attaching an IoT-Device to a user equipment, wherein the IoT-Device is configured to detect unauthorized actions, wherein the unauthorized action might be performed by a theft on the user equipment and/or on the IoT-Device. A possible unauthorized action is the removing of the user equipment from its current location or the shielding of the IoT-Device, e.g. by means of an aluminum foil;
Setting up a communication connection between the IoT-Device and a communication network, wherein the IoT-Device can send or receive signals via the communication network. For example, the communication network is a LTE-M, NB-loT or on 5G communication network;
Triggering of an alarm signal in case of an unauthorized action on the IoT-Device and/or the user device, wherein the IoT-Device detects the unauthorized action;
Transmission of the alarm signal via the communication network to a server connected to the communication network. The server can analyze the alarm signal and decide on the likelihood that it is a real alarm case, like a theft or the like, or not. In case of theft, the server can contact the user and/or an authority via the communication network;
Increasing and effective antenna area of the IoT-Device compared to an original effective antenna area of the IoT-Device. The effective antenna area is basically represented by the effective surface that can be used to transmit and to send radio signals. Each IoT-Device has its own built-in antenna, which is characterized by the original effective antenna area of the IoT-Device.

The main idea of the invention is that the original effective antenna area of the IoT-Device is often very small due to the fact that the IoT-Devices are built in a very compact way so that they can be retrofitted in the user equipment. Such a compact IoT-Devices exhibits only a small original effective antenna area that can be easily shielded by a theft if he wraps aluminum foil over the location where the IoT-Device is implemented at the user equipment. The advantage of the increased effective antenna area of the IoT-Device is that it cannot be shielded easily with small sheet of aluminum foil because this "new" increased effective antenna area can be spread over the whole user equipment. To facilitate this method, the IoT-Device can comprise an interface to connect external antennas or external elements that provide antenna functionality to the IoT-Device.

In addition to the detection of a change in position (e.g. via evaluation of GPS, Gallileo and/or Glonass coordinates), the IoT-Device can provide a functionality for the detection of a very abrupt reduction of the receiving field strength/radio link. The IoT device is therefore designed to detect rapid changes, in particular reductions in the receiving field strength/radio link of 50% within one second. Based on an analysis of confirmed unauthorized actions with respect to the changes in the receiving field strength or radio link within a certain time, it is possible to tailor the settings as to get an up to a compromise between the sensitivity to detect an authorized action without having too much cases of false alarm. To reduce the number of false alarm cases, it might be beneficial that an unauthorized action is only detected if a reduction in the receiving field strength/radio link of 50% occurs within five seconds without getting back to the original level.

If such an abrupt change is present, it can be detected as a possible alarm case. In this event, for example, a message can be sent to the user and/or an authority via a communication network. By means of this additional functionality, the attempt of a possibly "shadowing" of the IoT-Device can be detected, as it is to be expected with an experienced thief, e.g. by means of an aluminum foil carried along. The procedure according to the invention thus offers the advantage that not only the movement of the IoT-Device is recorded, but also activities carried out by a thief, for example, to prevent tracking of the position of the IoT-Device or the user equipment.

In the context of the IoT device, the communication system and/or the server, AI (artificial intelligence) can be used to learn common changes in the strength of the receive and/or transmit signal and thus help to detect unusual changes.

After a learning phase in which both movement and reception patterns "train" the neural network, the AI can continuously optimize the system. Especially by means of supervised learning the AI should be trained in the learning phase (machine learning). This is done, for example, by briefly confirming at the end of a certain period of time (e.g. a day) or an activity (e.g. a bike ride) that this was the intended use of the device secured by IoT. This confirmation can be made, for example, via app or by activating a contact on the IoT device.

In an embodiment, the IoT-Device is configured to detect abrupt changes in the receiving field strength and/or a position change. In this case the IoT-Device comprises a measuring unit that measures the receiving field strength that is transmitted to from the communication network to the IoT-Device.

This provides the advantage that multiple unauthorized actions can be detected by the IoT-Device. Even if a theft tries to shield the IoT-Device before removing the user equipment from its location, this action can be detected and transmitted as a possible alarm case to the user via the communication network.

In an embodiment, the server is configured to detect abrupt changes in the radio link strength and/or of the position change of the IoT-Device. In this case the server and/or communication network comprises a measuring unit that measures the radio link strength that is transmitted to from the IoT-Device to the communication network.

This provides the advantage that even if the theft succeeds in shielding the increased effective antenna area as a whole before the IoT-Device is able to send an alarm signal, the unauthorized action can nevertheless be detected by the server that detects the sudden drop in the radial link strength. For that purpose, the IoT-Device communicates regulatory with the communication system by sending status signals.

The term "server" is to be seen in a very general sense in the method according to the invention. This can also be a central component (control unit) in general, which is operated onPrem by the provider of the procedure, the operator of the mobile network or by a third party, for example in a public cloud. When using a cloud, all operating models are conceivable, e.g. laaS, PaaS, CaaS, SaaS.

In an embodiment, the IoT-Device is connected to antenna-capable components of the user equipment.

This provides the advantage that the effective antenna area of the IoT-Device is increased by using the user equipment itself or at least part of the user equipment as an antenna. This can be done by connecting parts of the user equipment that can conduct currents with an external antenna interface of IoT-Device. Of course it is required, that the connection is also able to conduct currents. A further advantage of this, that no external equipment, in particular antennas, is required.

In an embodiment, at least two IoT-Devices are attached to the user equipment and the at least two IoT-Devices are implemented in a hierarchical master/slave structure.

This provides the advantage that a first Master-IoT-Device can be in a radio connection with at least a second Slave-IoT-Device on the user equipment and make use of this second IoT-Device as a further transmitting and receiving station (e.g. the first IoT-Device is mounted as MASTER in the motor of an e-bike and two further IoT-Devices are mounted as SLAVE in the hollow tubes of the handlebars). If a thief succeeds in shielding the Master-IoT-Device and alarm signal can still be transmitted by one of the Slave-IoT-Devices to the communication network. In this context the at least two IoT-Devices should be attached at different locations of the user equipment.

The IoT-Device can be equipped with its own energy unit, which is especially configured for independent operation. In the context of this invention, the energy unit of the IoT-Device can also be labeled as the IoT-Device-Battery to distinguish it from the energy unit of the user equipment that can also be labeled as the user-equipment-battery.

This provides the advantage that the IoT-Device can detect and transmit alarm signals even if the user-equipment-battery is empty or if the thief dismounts the user-equipment-battery. It is beneficial to choose an IoT-Device-Battery that can operate the IoT-Device at least for the duration of one year.

In an embodiment, the IoT-Device is connected to the user-equipment-battery and that the IoT-Device obtains its operating energy with priority from the user-equipment-battery.

This provides the advantage that an energy level of the IoT-Device-Battery can be kept nearly constant if another energy source, in this case the energy of the user-equipment-battery is available. This enhances the lifetime IoT-Device-Battery, which ensures the functionality of the IoT-Device.

The IoT-Device-Battery can be a rechargeable battery that can be charged by the energy of the user-equipment-battery.

This provides the advantage energy level of the IoT-Device-Battery can be shifted to its original "full-charged" state. Therefore, the lifetime of the IoT-Device-Battery is even more enhanced as in the former case.

In a second aspect of the invention a communication system for detecting an alarm case is disclosed. The communication system is configured to carry out the method described above. The communication system comprises:
an user equipment with at least one antenna compatible component,
an IoT-Device attached to a user equipment, wherein the IoT-Device is configured to detect unauthorized actions and to send radio signals, in particular alarm signals;
a communication network, wherein the communication network is adapted to establish a communication link with the IoT device and to forward the radio signals received from the IoT device to a user,
wherein the IoT-Device is attached to at least one antenna compatible component of the user equipment.

In principle, every component of the user equipment that is able to conduct currents can serve as an antenna compatible component.

This provides the advantage that the effective antenna area is increased compare to an original effective antenna area, wherein the original effective antenna area is being provided by the internal antenna of the IoT-Device. Such an increased effective antenna area prevents that thief can easily shield the IoT-Device from sending alarm signals if an unauthorized action is detected by the IoT-Device.

In an embodiment, the IoT-Device has at least one interface for connecting external antennas.

This provides the advantage that the IoT-Device can be easily connected with the antenna compatible components of the user equipment.

In a third aspect of the invention a communication system for detecting an alarm case is disclosed. The communication system is configured to carry out the method described above. The communication system comprises:
an IoT-Device attached to a user equipment, wherein the IoT-Device is configured to detect unauthorized actions and to send radio signals, in particular alarm signals;
a communication network, wherein the communication network is configured to establish a communication link with the IoT device and to forward the radio signals received from the IoT device to a user,
at least two IoT-Devices that are attached to the user equipment, wherein the IoT-Devices are configured to send and receive radio signals to each other and build up a hierarchical master/slave structure.

This provides the advantage that a first Master-IoT-Device can be in a radio connection with at least a second Slave-IoT-Device on the user equipment and make use of this second IoT-Device as a further transmitting and receiving station (e.g. the first IoT-Device is mounted as MASTER in the motor of an e-bike and two further IoT-Devices are mounted as SLAVE in the hollow tubes of the handlebars). If a thief succeeds in shielding the Master-IoT-Device and alarm signal can still be transmitted by one of the Slave-IoT-Devices to the communication network. In this context the at least two IoT-Devices should be attached at different locations of the user equipment.

In a fourth aspect of the invention an IoT-Device for detecting an alarm case is disclosed, wherein the IoT-Device is configured to be used in any of the communication systems and for executing the methods described above.

In an embodiment, the IoT-Device comprises an interface for connecting external antennas and/or that the IoT-Device is configured to receive and transmit radio signals. Furthermore, the IoT-Device can be built to detect a change in its position location and other unauthorized actions, wherein the other unauthorized actions can result in a sudden change of field strength parameters.

This provides the advantage that the IoT-Device is capable to detect various actions performed by a thief to steal the user equipment.

In an embodiment, the IoT-Device has a processor which is configured to support a master and/or a slave functionality.

In the following, preferred embodiments of the present invention are described with reference to the accompanying figure:
- Fig. 1: shows a conventional way to attach an IoT-Device to a user equipment and to communicate with the communication network.
- Fig. 2: shows the inventive way to attach the IoT-Device to the user equipment.
- Fig. 3: shows another example of Fig. 2.
- Fig. 4: shows the inventive IoT-Device.
- Fig. 5: shows the IoT-Device in an inventive Master/Slave arrangement.

In the following, numerous features of the present invention are explained in detail by means of preferred embodiments. The present disclosure is not limited to the specifically named combinations of features. Rather, the features mentioned here can be combined arbitrarily into inventive embodiments, unless this is expressly excluded below.

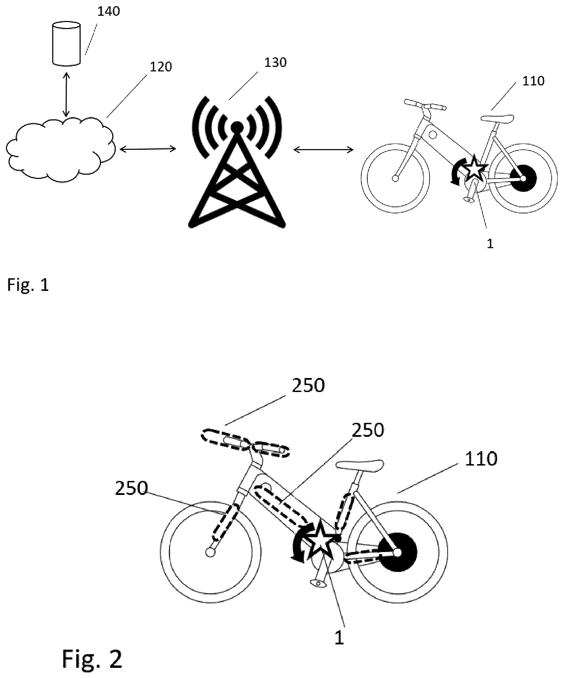

Fig. 1 shows a conventional way to attach an IoT-Device 1 to a user equipment 110, wherein the user equipment 110 can be an e-bike 110, for example. The IoT-Device 1 is often retrofitted into the e-bike 110 close to the energy source of the e-bike 110, so that it might be supplied with power from the energy source of the e-bike 110. In the following the energy source of the e-bike 110 will be labeled as user-equipment-battery. The IoT-Device 1 is configured to detect changes of its position and hence also changes in the position of the e-bike 110. Such a geographical position change can happen when a thief tries to steal the e-bike 110. In this case the IoT-Device 1 can transmit an alarm signal to the communication network 120. It is advantageous if the IoT-Device 1 transmits the radio signals of the alarm signal in a LTE-M or NB-loT Mode to the an eNodeB 15 because those modes are energy efficient modes that save the lifetime of the energy unit of the IoT-Device 1. In the following, the energy unit of the IoT-Device 1 will be labeled as IoT-Device-Battery. The communication network 10 can forward the radio signals/alarm signals of the IoT-Device 1 to a server 140. The server 140 can analyze the radio signals and inform the user by means of a message to his mobile that the geographical position of his e-bike 110 has changed.

The inventive method has the effect that parts of the e-bike 110 or the whole e-bike 110 can be used as an antenna. The antenna can be used additionally or alternatively to receive position data via GPR, Gallileo and/or Glonass.

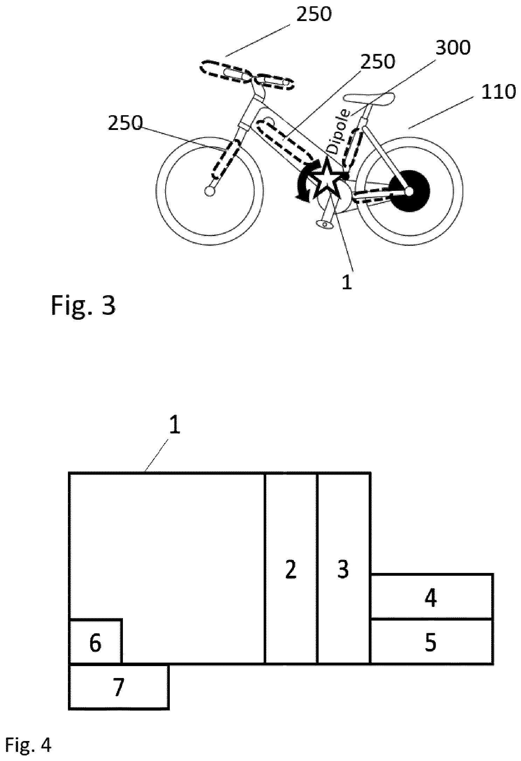

Fig. 2 shows which components of the e-bike 110 can function as possible surfaces for a transmitting and/or receiving antenna 250, which increases the effective area of the antenna. Only one of these surfaces, but also several of them can be used in combination, e.g. the frame can represent the antenna (dipole 300) in its entirety, as shown in Fig. 3. One pole is at the top and the other at the bottom of the frame.

Fig. 4 shows the IoT-Device 1, which is at least set up to perform geo-tracking. A transmitting and receiving device 2 is built into the IoT-Device. This built-in transmitting and receiving device 2 forms the original effective effective area of the antenna, so to speak. The radio link to the eNodeB 130 is implemented by means of an energy-efficient LTE-M or NB-loT connection. The IoT-Device 1 can be supplemented by an interface 3 for external antennas 4, 5. Although only two additional external antennas 4, 5 are shown in Fig. 4, the invention is to be understood as meaning that, in principle, any number "n" can be connected to external components 4, 5. The external antennas 4,5 are especially formed from parts of the working unit or from the working unit as a whole. Furthermore, it is possible to apply external antennas 4, 5 to the working unit, which can be done, for example, by applying an electrically conductive paint or an electrically conductive adhesive foil.

An antenna 2, 4, 5 can enable or at least support the reception of position data via GPS, Gallileo and Glonass. An IoT-Device-Battery 6 is also installed in the IoT-Device 1 and guarantees an independent power supply. A power supply interface 7 enables the IoT-Device 1 to be connected to the user-equipment battery and to receive power from it, especially to spare the IoT-Device-Battery 6. With this arrangement, the IoT-Device 1 can be supplied with power for at least 120 hours in such a way that position transmission is possible - even if the user-equipment

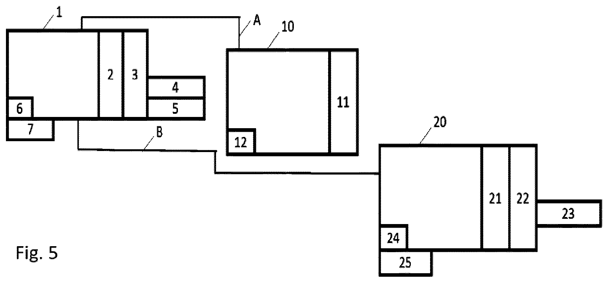

Fig. 5 shows the method according to the invention, in which a first IoT-Device 1, which works as a first slave 10, and a second IoT-Device 1, which works as a second slave 20, are in a connection (A, B) to the IoT-Device 1 that works as a master 1. In principle, the number of slaves is freely selectable.

The Slaves 10, 20 perform one or more of the following tasks:
a) supplementing the transmit/receive antennas of master 1;
b) replacement of the transmit/receive antennas of master 1;
c) supplementing the receiving antenna of master 1 to determine the position by GPS, Galieleo and/or Glonass
d) Replacement of the receiving antenna of master 1 to determine the position by GPS, Galieleo and/or Glonass

The slaves 10, 20 can have their own power supply 11 and 24, but this power supply can also be replaced or supplemented by an additional power supply 25 for emergency operation. It is also possible to use the battery of the e-bike 110.

Power supply (6, 7, 12, 24 and 25) usually means batteries and especially accumulators. However, capacitors or other sufficiently dimensioned charge accumulators can also be used. Connection to a fixed power supply (e.g. 230V mains voltage) may also be possible, but this means that an alternative power supply (e.g. by rechargeable battery) must be used if the mains supply fails. The alternative power supply (e.g. rechargeable battery) is especially intended to have an energy supply interface at the IoT-Device 1.

In the following, it is described in detail how a possible theft of the e-bike 110 can be detected.

A theft can be detected when the position of the e-bike 110 is changed or when the signal strength of a signal received at one or more receiving antennas is drastically reduced. The term "signal" covers all possible technical signals, such as the satellite signal that can be received via GPS to determine the position or signals from a radio connection to a mobile phone mast. The term "mobile radio mast" refers to any transmitting and/or receiving equipment used in mobile radio. Such mobile radio masts can be mounted on towers and buildings, but also in street lamps or other objects accessible in public areas. They may be specially set up for the operation of IoT.

Radio connections/radio links that are used in the loT-technique (e.g. via LTE-M or NB-IoT) do not exist as permanently as, for example, radio connections in the normal mobile radio network via native LTE. For this reason, it is advantageous if additional radio signals ("beacons") are emitted from the eNodeB 130 and/or the IoT-Device 110 in order to detect a change in the radio connection.

The IoT-Device 1 establishes radio links to several very accurate clocks for positioning purposes, so that eNodeB 130 or the equipment available there for providing the network via LTE-M or NB-IoT usually can also access an accurate time reference. Accordingly, the bacon can be sent, for example, as follows:
- Every even second (0, 2, 4 ...) the IoT device 1 sends a very low power bacon.
- In every odd second (1, 3, 5, ...) the eNodeB 130 sends a broadcast signal with high power.

The broadcast signal is used to check for a possible change in the reception strength (field strength) for all IoT-Devices 1 in the transmission area of the 130 mobile mast. If the reception strength (field strength) decreases significantly without a change in location being noticed, a "shading" of the IoT-Device is assumed, which indicates a possible theft that is currently taking place or at least being prepared. Due to the increased effective antenna area of the IoT-Device 1, the total shielding is more difficult so that the IoT-Device 1 is still able to establish a radio link with the communication network 120 in order to send the alarm signal.

The same applies if, as a result of the bacon emitted by the IoT-Device 1, it is received again with a significantly high field strength at one or more antennas. An aluminum foil used to inhibit the radio link between the IoT-Device 1 and the eNodeB 130 will reflect the Bacon signal, so that it is received with an unusually high field strength.

At such selected times, a thief would have a maximum of about 1 second to "shadow" the e-bike 110 in the worst case scenario so that it can no longer send an alarm message. In a best case scenario, the shading and the current position of the e-bike 110 is monitored and the status is continuously reported, at least as long as an additional emergency power supply is possible (e.g. 12 hours). If additional power supplies can be used, such as the battery in the e-bike 110, geo-tracking is possible for much longer.

The method to prevent theft is in principle more effective, the larger the user equipment 110 is and the more antenna compatible parts this user equipment 110 comprises. Therefore, the method might be more effective when applied to the e-bike 110 than to a cordless drill.

The procedure can also use only the broadcast signal sent by the eNodeB, but then it should be sent with a higher clock rate, e.g. every second. The procedure does not only prevent theft of loT-protected user terminals, but also generally improves the quality of the radio connection of the IoT-Device, even in adverse environments such as an underground car park. In addition, the possible transmission rate of the IoT Device connection may also increase.

## Claims

1. Method for detecting an alarm case of a user equipment in a communication system comprising the following steps:
Attaching an IoT-Device to a user equipment, wherein the IoT-Device is configured to detect unauthorized actions, wherein an effective antenna area of the IoT-Device is increased compared to an original effective antenna area of the IoT-Device by connecting the IoT-Device to antenna-capable components of the user equipment;
Setting up a communication connection between the IoT-Device and a communication network;
Triggering of an alarm signal in case of an unauthorized action on the IoT-Device and/or the user equipment,
Transmission of the alarm signal via the communication network to a server connected to the communication network,
**characterized in**
**that** the IoT-Device detects abrupt changes in a receiving field strength and of the position change of the IoT-Device, wherein the IoT-Device comprises a measuring unit that measures the receiving field strength that is transmitted from the communication network to the IoT-Device, wherein the IoT-Device uses artificial intelligence to learn common changes in the strength of the received signal to detect unusual changes.

2. The Method of one of the preceding claims, **characterized in that** at least two IoT-Devices are attached to the user equipment and the IoT-Devices are implemented in a hierarchical master/slave structure.

3. The Method of claim 2, **characterized in that** the at least two IoT-Devices are attached at different locations of the user equipment.

4. The Method of one of the preceding claims, **characterized in that** the IoT-Device is equipped with its own energy unit, which is especially configured for independent operation.

5. The Method of claim 4, **characterized in that** the IoT-Device is connected to an energy unit of the user equipment and the IoT-Device obtains its operating energy with priority from the energy unit of the user equipment.

6. The Method of claim 5, **characterized in that** the energy unit of the IoT-Device is a rechargeable battery and is charged by the energy unit of the user equipment.

7. Communication system for detecting an alarm case of a user equipment configured for executing a method according to claim 1, comprising:
a user equipment with at least one antenna compatible component, an IoT-Device attached to the user equipment, wherein the IoT-Device is configured to detect unauthorized actions and to send radio signals, wherein the IoT-Device is attached to at least one antenna compatible component of the user equipment,
a communication network, wherein the communication network is adapted to establish a communication link with the IoT device and to forward the radio signals received from the IoT device to a user,
**characterized in that**
the IoT-Device is configured to detect abrupt changes in a receiving field
strength and of the position change of the IoT-Device, wherein the IoT-Device comprises a measuring unit that is configured to measure the receiving field strength that is transmitted from the communication network to the IoT-Device, wherein the IoT-Device uses artificial intelligence to learn common changes in the strength of the received signal to detect unusual changes.

8. The Communication system of claim 7, **characterized in that** the IoT-Device has at least one interface for connecting external antennas

## Patentansprüche

1. Verfahren zum Detektieren eines Alarmfalls eines Benutzergeräts in einem Kommunikationssystem, das die folgenden Schritte umfasst:
Anbringen einer loT-Vorrichtung an einem Benutzergerät, wobei die loT-Vorrichtung dazu eingerichtet ist, nicht autorisierte Aktionen zu detektieren, wobei eine effektive Antennenfläche der loT-Vorrichtung im Vergleich zu einer ursprünglichen effektiven Antennenfläche der IoT-Vorrichtung erhöht wird, indem die loT-Vorrichtung mit antennenfähigen Komponenten des Benutzergeräts verbunden wird;
Einrichten einer Kommunikationsverbindung zwischen der loT-Vorrichtung und einem Kommunikationsnetzwerk;
Auslösen eines Alarmsignals im Falle einer nicht autorisierten Aktion auf der loT-Vorrichtung und/oder dem Benutzergerät,
Übertragung des Alarmsignals über das Kommunikationsnetzwerk an einen Server, der mit dem Kommunikationsnetzwerk verbunden ist,
**dadurch gekennzeichnet,**
**dass** die IoT-Vorrichtung abrupte Änderungen einer Empfangsfeldstärke und der Positionsänderung der loT-Vorrichtung detektiert, wobei die IoT-Vorrichtung eine Messeinheit umfasst, die die Empfangsfeldstärke misst, die von dem Kommunikationsnetzwerk an die loT-Vorrichtung übertragen wird, wobei die loT-Vorrichtung künstliche Intelligenz verwendet, um übliche Änderungen der Stärke des empfangenen Signals zu lernen, um ungewöhnliche Änderungen zu detektieren.

2. Verfahren nach einem der vorhergehenden Ansprüche, **dadurch gekennzeichnet, dass** mindestens zwei IoT-Vorrichtungen an dem Benutzergerät angebracht sind und die loT-Vorrichtungen in einer hierarchischen Master/Slave-Struktur implementiert sind.

3. Verfahren nach Anspruch 2, **dadurch gekennzeichnet, dass** die mindestens zwei loT-Vorrichtungen an verschiedenen Orten des Benutzergeräts angebracht sind.

4. Verfahren nach einem der vorhergehenden Ansprüche, **dadurch gekennzeichnet, dass** die loT-Vorrichtung mit einer eigenen Energieeinheit ausgestattet ist, die insbesondere für einen unabhängigen Betrieb konfiguriert ist.

5. Verfahren nach Anspruch 4, **dadurch gekennzeichnet, dass** die loT-Vorrichtung mit einer Energieeinheit des Benutzergeräts verbunden ist und die IoT-Vorrichtung ihre Betriebsenergie mit Priorität von der Energieeinheit des Benutzergeräts erhält.

6. Verfahren nach Anspruch 5, **dadurch gekennzeichnet, dass** die Energieeinheit der IoT-Vorrichtung eine wiederaufladbare Batterie ist und durch die Energieeinheit des Benutzergeräts geladen wird.

7. Kommunikationssystem zum Detektieren eines Alarmfalls eines Benutzergeräts, das zum Ausführen eines Verfahrens nach Anspruch 1 eingerichtet ist, umfassend:
ein Benutzergerät mit mindestens einer antennenkompatiblen Komponente,
eine loT-Vorrichtung, die an dem Benutzergerät angebracht ist, wobei die loT-Vorrichtung dazu eingerichtet ist, nicht autorisierte Aktionen zu detektieren und Funksignale zu senden, wobei die loT-Vorrichtung an mindestens einer antennenkompatiblen Komponente des Benutzergeräts angebracht ist;
ein Kommunikationsnetzwerk, wobei das Kommunikationsnetzwerk dazu eingerichtet ist, einen Kommunikationslink mit der loT-Vorrichtung herzustellen und die von der IoT-Vorrichtung empfangenen Funksignale an einen Benutzer weiterzuleiten,
**dadurch gekennzeichnet, dass**
die IoT-Vorrichtung dazu eingerichtet ist, abrupte Änderungen einer Empfangsfeldstärke und der Positionsänderung der loT-Vorrichtung zu detektieren, wobei die loT-Vorrichtung eine Messeinheit umfasst, die dazu eingerichtet ist, die Empfangsfeldstärke zu messen, die von dem Kommunikationsnetzwerk an die IoT-Vorrichtung übertragen wird, wobei die loT-Vorrichtung künstliche Intelligenz verwendet, um übliche Änderungen der Stärke des empfangenen Signals zu lernen, um ungewöhnliche Änderungen zu detektieren.

8. Kommunikationssystem nach Anspruch 7, **dadurch gekennzeichnet, dass** die IoT-Vorrichtung mindestens eine Schnittstelle zum Verbinden externer Antennen aufweist.

## Revendications

1. Procédé pour détecter un cas d'alarme d'un équipement utilisateur dans un système de communication, comprenant les étapes suivantes :
fixer un dispositif IdO à un équipement utilisateur, le dispositif IdO étant configuré pour détecter des actions non autorisées, la surface d'antenne effective du dispositif IdO étant augmentée par rapport à la surface d'antenne effective d'origine du dispositif IdO en connectant le dispositif IdO à des composants compatibles avec l'antenne de l'équipement utilisateur ;
établir une connexion de communication entre le dispositif IdO et un réseau de communication ;
déclencher un signal d'alarme en cas d'action non autorisée sur le dispositif IdO et/ou l'équipement utilisateur,
transmettre le signal d'alarme via le réseau de communication à un serveur connecté au réseau de communication,
**caractérisé**
**en ce que** le dispositif IdO détecte des changements brusques dans l'intensité du champ de réception et le changement de position du dispositif IdO, le dispositif IdO comprenant une unité de mesure qui mesure l'intensité du champ de réception transmis du réseau de communication au dispositif IdO, le dispositif IdO utilisant l'intelligence artificielle pour apprendre des changements courants dans l'intensité du signal reçu afin de détecter des changements inhabituels.

2. Procédé selon l'une des revendications précédentes, **caractérisé en ce qu'**au moins deux dispositifs IdO sont fixés à l'équipement utilisateur et **en ce que** les dispositifs IdO sont mis en œuvre dans une structure hiérarchique maître/esclave.

3. Procédé selon la revendication 2, **caractérisé en ce que** lesdits au moins deux dispositifs IdO sont fixés à différents emplacements de l'équipement utilisateur.

4. Procédé selon l'une des revendications précédentes, **caractérisé en ce que** le dispositif IdO est équipé de sa propre unité d'énergie, qui est spécialement configurée pour un fonctionnement indépendant.

5. Procédé selon la revendication 4, **caractérisé en ce que** le dispositif IdO est connecté à une unité d'énergie de l'équipement utilisateur et le dispositif IdO obtient son énergie de fonctionnement en priorité à partir de l'unité d'énergie de l'équipement utilisateur.

6. Procédé selon la revendication 5, **caractérisé en ce que** l'unité d'énergie du dispositif IdO est une batterie rechargeable et est chargée par l'unité d'énergie de l'équipement utilisateur.

7. Système de communication pour détecter un cas d'alarme d'un équipement utilisateur configuré pour exécuter un procédé selon la revendication 1, comprenant :
un équipement utilisateur ayant au moins un composant compatible avec une antenne, un dispositif IdO fixé à l'équipement utilisateur, le dispositif IdO étant configuré pour détecter des actions non autorisées et pour envoyer des signaux radio, le dispositif IdO étant fixé à au moins un composant compatible avec une antenne de l'équipement utilisateur ;
un réseau de communication, le réseau de communication étant adapté pour établir une liaison de communication avec le dispositif IdO et pour transmettre les signaux radio reçus du dispositif IdO à un utilisateur,
**caractérisé en ce que**
le dispositif IdO est configuré pour détecter des changements brusques dans l'intensité du champ de réception et dans la position du dispositif IdO, le dispositif IdO comprenant une unité de mesure qui est configurée pour mesurer l'intensité du champ de réception qui est transmise du réseau de communication au dispositif IdO, le dispositif IdO utilisant l'intelligence artificielle pour apprendre des changements courants dans l'intensité du signal reçu afin de détecter des changements inhabituels.

8. Système de communication selon la revendication 7, **caractérisé en ce que** le dispositif IdO présente au moins une interface pour connecter des antennes externes.
